# EUROPEAN PATENT APPLICATION

(11) **EP 4 516 729 A1**
(43) Date of publication of application: **05.03.2025**
(21) Application number: 23795852.5
(22) Date of filing: 09.02.2023
(51) Int. Cl.: C01B 3/30, B01J 21/02, B01J 23/74, C01B 3/26

(54) **HYDROGEN PRODUCTION DEVICE, POWER GENERATION SYSTEM, AND STEELMAKING SYSTEM**

(30) Priority: 27.04.2022 JP 2022073628
(71) Applicant: IHI Corporation, Tokyo 135-8710 (JP)
(72) Inventor: ITO, Takamasa, Tokyo 135-8710 (JP); NARISAWA, Michinori, Tokyo 135-8710 (JP); MIYAURA, Takuto, Tokyo 135-8710 (JP); FUJIYOSHI, Hironobu, Tokyo 135-8710 (JP)
(74) Representative: TBK
(86) International application number: PCT/JP2023/004436
(87) International publication number: WO 2023/210104

(57) **Abstract**

Provided is a hydrogen production apparatus (100) including: an accommodating tank (110); a heating unit (120) placed in the accommodating tank (110); a first diffuser tube (130) placed below the heating unit (120) in the accommodating tank (110); a second diffuser tube (140) placed below the first diffuser tube (130) in the accommodating tank (110); a catalyst supply unit (150) that supplies a catalyst containing any one or more of iron, nickel, copper, and aluminum from a supply port (116a) formed above the heating unit (120) in the accommodating tank (110); a catalyst discharge unit (160) that discharges the catalyst from a discharge port (114a) formed below the second diffuser tube (140) in the accommodating tank (110); and a raw material gas supply unit (170) that supplies a raw material gas containing at least hydrocarbon to the first diffuser tube (130) and the second diffuser tube (140).

## Description

### Technical Field

The present disclosure relates to a hydrogen production apparatus, a power generation system, and a steelmaking system. This application claims the benefit of priority to Japanese Patent Application No. 2022-073628 filed on April 27, 2022, and contents thereof are incorporated herein.

### Background Art

As a technology for producing hydrogen, there has been known a technology for subjecting hydrocarbon, such as methane, to steam reforming. However, the steam reforming of hydrocarbon produces carbon dioxide in a production process of hydrogen. Thus, it is conceived to produce hydrogen without emitting carbon dioxide by subjecting hydrocarbon to pyrolysis to generate carbon as a solid.

As a technology for subjecting hydrocarbon to pyrolysis, there is a disclosure of an apparatus including a reaction furnace, a raw material gas supply source, and a heating unit provided outside the reaction furnace (e.g., Patent Literature 1). The reaction furnace accommodates a catalyst. The raw material gas supply source supplies hydrocarbon to the reaction furnace. The heating unit is provided on the periphery of the reaction furnace and heats the inside of the reaction furnace.

### Citation List

### Patent Literature

[PTL 1] JP 5862559 B2

### Summary

### Technical Problem

The pyrolysis reaction of hydrocarbon progresses efficiently at 800°C or more through use of a catalyst. However, the pyrolysis reaction of hydrocarbon is an endothermic reaction, and hence it is required to supply heat from outside. Thus, in the technology for heating the reaction furnace from outside as in Patent Literature 1 described above, it is required to heat a furnace wall of the reaction furnace to at least an inside temperature(for example, 1,000°C or more) in order to heat the inside of the reaction furnace to 800°C or more. Then, the reaction furnace needs to be formed of a material such as an expensive heat-resistant alloy having satisfactory heat conductivity while having a heat resistance of 1,000°C or more, causing a problem in that the cost for a heating apparatus and the reaction furnace is increased. In addition, in the technology of heating the reaction furnace from outside, the catalyst in the reaction furnace is heated from a wall surface, and hence a temperature difference occurs between the vicinity of the wall surface and the central portion when the volume of the catalyst becomes large. Thus, it is difficult to uniformly and efficiently decompose hydrocarbon in the reaction furnace, and hence it is difficult to increase the size of the reaction furnace.

In view of the above-mentioned problem, the present disclosure has an object to provide a hydrogen production apparatus, a power generation system, and a steelmaking system that are capable of subjecting hydrocarbon to pyrolysis at low cost.

### Solution to Problem

In order to solve the above-mentioned problem, according to one aspect of the present disclosure, there is provided a hydrogen production apparatus, including: an accommodating tank; a heating unit placed in the accommodating tank; a first diffuser tube placed below the heating unit in the accommodating tank; a second diffuser tube placed below the first diffuser tube in the accommodating tank; a catalyst supply unit that supplies a catalyst containing any one or more of iron, nickel, copper, and aluminum from a supply port formed above the heating unit in the accommodating tank; a catalyst discharge unit that discharges the catalyst from a discharge port formed below the second diffuser tube in the accommodating tank; and a raw material gas supply unit that supplies a raw material gas containing at least hydrocarbon to the first diffuser tube and the second diffuser tube.

Further, a flow rate of the raw material gas to be supplied to the first diffuser tube by the raw material gas supply unit may be larger than a flow rate of the raw material gas to be supplied to the second diffuser tube.

Further, a superficial velocity ratio UO/Umf of a total of the raw material gas diffused from the first diffuser tube and the raw material gas diffused from the second diffuser tube may be 1.1 or more and 2.0 or less.

Further, in the accommodating tank, a fluidized bed of the catalyst may be formed above the first diffuser tube, and a moving bed of the catalyst may be formed below the first diffuser tube.

Further, the accommodating tank may include: an upper portion having a tubular shape; and a lower portion, which is formed below the upper portion, and in which a horizontal cross-section area of an internal space is gradually decreased from above to below. The heating unit may be placed in the upper portion. The second diffuser tube may be placed in the lower portion.

Further, the accommodating tank may include one upper portion and a plurality of lower portions.

In order to solve the above-mentioned problem, according to one aspect of the present disclosure, there is provided a power generation system, including: a hydrogen production apparatus including: an accommodating tank; a heating unit placed in the accommodating tank; a first diffuser tube placed below the heating unit in the accommodating tank; a second diffuser tube placed below the first diffuser tube in the accommodating tank; a catalyst supply unit that supplies a catalyst containing any one or more of iron, nickel, copper, and aluminum from a supply port formed above the heating unit in the accommodating tank; a catalyst discharge unit that discharges the catalyst from a discharge port formed below the second diffuser tube in the accommodating tank; and a raw material gas supply unit that supplies a raw material gas containing at least hydrocarbon to the first diffuser tube and the second diffuser tube; and a power generation apparatus that generates power through use of hydrogen produced by the hydrogen production apparatus.

In order to solve the above-mentioned problem, according to one aspect of the present disclosure, there is provided a steelmaking system, including: a hydrogen production apparatus including: an accommodating tank; a heating unit placed in the accommodating tank; a first diffuser tube placed below the heating unit in the accommodating tank; a second diffuser tube placed below the first diffuser tube in the accommodating tank; a catalyst supply unit that supplies a catalyst containing any one or more of iron, nickel, copper, and aluminum from a supply port formed above the heating unit in the accommodating tank; a catalyst discharge unit that discharges the catalyst from a discharge port formed below the second diffuser tube in the accommodating tank; and a raw material gas supply unit that supplies a raw material gas containing at least hydrocarbon to the first diffuser tube and the second diffuser tube; and a steelmaking apparatus that produces iron through use of hydrogen produced by the hydrogen production apparatus.

### Advantageous Effects of Invention

According to the present disclosure, it is possible to subject hydrocarbon to pyrolysis at low cost.

### Brief Description of Drawings

FIG. 1 is a view for schematically illustrating a hydrogen production apparatus according to an embodiment.
FIG. 2 is a view for illustrating a hydrogen production apparatus according to a modification example.
FIG. 3 is a diagram for illustrating a power generation system according to an embodiment.
FIG. 4 is a diagram for illustrating another power generation system according to an embodiment.
FIG. 5 is a diagram for illustrating another power generation system according to an embodiment.
FIG. 6 is a diagram for illustrating a steelmaking system according to an embodiment.
FIG. 7 is a diagram for illustrating another steelmaking system according to an embodiment.
FIG. 8 is a view for illustrating another example of the installation form of first diffuser tubes.
FIG. 9 is a first view for illustrating another example of the shape of an accommodating tank.
FIG. 10 is a second view for illustrating another example of the shape of the accommodating tank.

### Description of Embodiments

Now, with reference to the attached drawings, embodiments of the present disclosure are described in detail. The dimensions, materials, and other specific numerical values represented in the embodiment are merely examples used for facilitating the understanding of the disclosure, and do not limit the present disclosure unless otherwise particularly noted. Elements having substantially the same functions and configurations herein and in the drawings are denoted by the same reference symbols to omit redundant description thereof. Further, illustration of elements with no direct relationship to the present disclosure is omitted.

### [Hydrogen Production Apparatus 100]

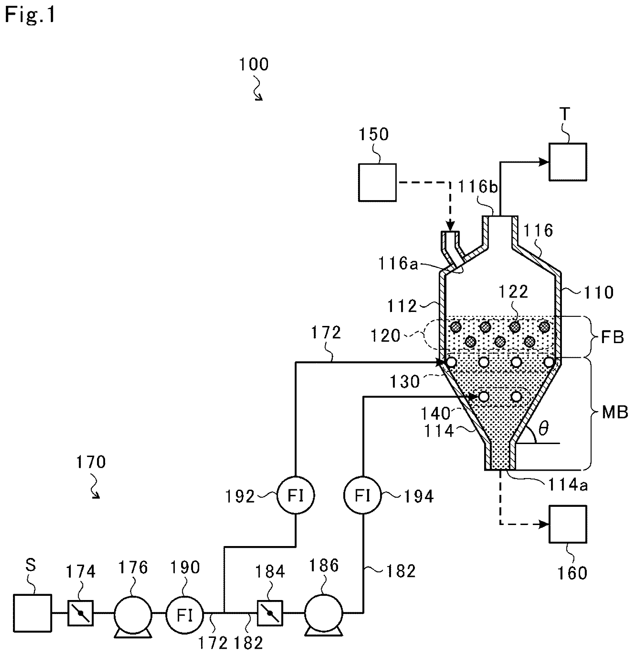

FIG. 1 is a view for schematically illustrating a hydrogen production apparatus 100 according to this embodiment. In FIG. 1, the solid arrows indicate flows of a raw material gas and a generated gas. In FIG. 1, the dashed line arrows indicate flows of a catalyst and solid carbon. In addition, in FIG. 1, a heating unit 120 is indicated by hatching.

As illustrated in FIG. 1, the hydrogen production apparatus 100 includes an accommodating tank 110, the heating unit 120, a first diffuser tube 130, a second diffuser tube 140, a catalyst supply unit 150, a catalyst discharge unit 160, and a raw material gas supply unit 170.

The accommodating tank 110 is a container (hopper) that temporarily accommodates a catalyst. The accommodating tank 110 has a tubular shape and is installed so that the central axis direction thereof is in a vertical direction. In this embodiment, the accommodating tank 110 includes an upper portion 112, a lower portion 114, and a lid portion 116.

The upper portion 112 is a portion having a tubular shape, such as a cylinder, an elliptical cylinder, or a rectangular tube. The horizontal cross-section area of the internal space of the upper portion 112 is, for example, substantially constant from above to below.

The lower portion 114 is a portion formed below the upper portion 112. The horizontal cross-section area of the internal space of the lower portion 114 is gradually decreased from above to below. For example, the lower portion 114 is a tube having a cone shape in which the inner diameter is gradually decreased from above to below. An inclination angle θ of the lower portion 114 is, for example, 60 degrees.

The lid portion 116 is a portion formed above the upper portion 112. The horizontal cross-section area of the internal space of the lid portion 116 is gradually increased from above to below. For example, the lid portion 116 is a tube having a cone shape in which the inner diameter is gradually increased from above to below.

The catalyst to be accommodated in the accommodating tank 110 is a catalyst that accelerates the pyrolysis reaction represented by the following formula (1).

CH_{4→}C+2H₂ ··· Formula (1)

The catalyst contains any one or more of iron, nickel, copper, and aluminum. In this embodiment, the catalyst is a natural mineral, for example, iron ore. The catalyst is not required to be a natural mineral as long as the catalyst contains any one or more of iron, nickel, copper and aluminum. The particle size of the catalyst is, for example, 50 µm or more and 1,000 µm or less, preferably 100 µm or more and 300 µm or less.

The heating unit 120 is placed in the upper portion 112 forming the accommodating tank 110. The heating unit 120 heats the catalyst to a temperature at which the pyrolysis reaction represented by the above-mentioned formula (1) is efficiently accelerated. The heating unit 120 heats the catalyst so that the temperature of the catalyst becomes, for example, 800°C or more and 900°C or less. In this embodiment, the heating unit 120 includes a plurality of heating members 122. The heating members 122 each have, for example, a columnar shape or a cylindrical shape. The plurality of heating members 122 are installed in the upper portion 112 so that the central axis directions thereof are in a horizontal direction. The plurality of heating members 122 are placed substantially evenly in the upper portion 112. In this embodiment, the plurality of heating members 122 are placed in parallel to the horizontal direction. In addition, in this embodiment, the plurality of heating members 122 are placed in two stages at different positions in the vertical direction.

The heating unit 120 is formed of, for example, an electric heater or a heat transfer tube. When the heating unit 120 is formed of an electric heater, the heating unit 120 includes, for example, a heat transfer body (ceramic) having a columnar shape and a heat generator built in the heat transfer body. In addition, it is appropriate that one or both of electric power generated by renewable energy and electric power generated by nuclear power generation be supplied to the electric heater. In addition, when the heating unit 120 is formed of a heat transfer tube, a heat medium that passes through the inside of the heat transfer tube is, for example, a combustion exhaust gas.

The first diffuser tube 130 is placed below the heating unit 120 in the accommodating tank 110. In this embodiment, the first diffuser tube 130 is placed in the upper portion 112. A plurality of first diffuser tubes 130 are placed. The plurality of first diffuser tubes 130 are placed in the upper portion 112 so that the central axis directions thereof are in the horizontal direction. In this embodiment, the plurality of first diffuser tubes 130 are placed in parallel to the horizontal direction. A plurality of holes are formed in each of the first diffuser tubes 130.

The second diffuser tube 140 is placed below the first diffuser tubes 130 in the accommodating tank 110. In this embodiment, the second diffuser tube 140 is placed in the lower portion 114 forming the accommodating tank 110. In this embodiment, a plurality of second diffuser tubes 140 are placed. The plurality of second diffuser tubes 140 are placed in the lower portion 114 so that the central axis directions thereof are in the horizontal direction. In this embodiment, the plurality of second diffuser tubes 140 are placed in parallel to the horizontal direction. A plurality of holes are formed in each of the second diffuser tubes 140.

The catalyst supply unit 150 supplies the catalyst from a supply port 116a formed in the lid portion 116.

The catalyst discharge unit 160 discharges the catalyst from a discharge port 114a formed on a bottom surface of the lower portion 114.

The raw material gas supply unit 170 supplies a raw material gas to the first diffuser tubes 130 and the second diffuser tubes 140. The raw material gas is a gas containing at least hydrocarbon (e.g., methane). The raw material gas is, for example, a natural gas obtained by vaporizing a liquefied natural gas (LNG).

In this embodiment, the raw material gas supply unit 170 includes a first supply tube 172, a flow rate adjustment valve 174, a first blower 176, a second supply tube 182, a flow rate adjustment valve 184, a second blower 186, and flowmeters 190, 192, and 194.

The first supply tube 172 is a pipe that connects a supply source S of the raw material gas and the first diffuser tubes 130 to each other. The first supply tube 172 includes the flow rate adjustment valve 174 and the first blower 176.

The flow rate adjustment valve 174 adjusts the opening degree of a flow path formed in the first supply tube 172. The flow rate adjustment valve 174 is, for example, a butterfly valve.

The first blower 176 is placed between the flow rate adjustment valve 174 in the first supply tube 172 and the first diffuser tubes 130. The suction side of the first blower 176 is connected to the flow rate adjustment valve 174. The ejection side of the first blower 176 is connected to the first diffuser tubes 130. The first blower 176 boosts the pressure of the raw material gas.

The second supply tube 182 is a pipe branched from between the first blower 176 in the first supply tube 172 and the first diffuser tubes 130 and connected to the second diffuser tubes 140. The second supply tube 182 includes a flow rate adjustment valve 184 and a second blower 186.

The flow rate adjustment valve 184 adjusts the opening degree of a flow path formed in the second supply tube 182. The flow rate adjustment valve 184 is, for example, a butterfly valve.

The second blower 186 is placed between the flow rate adjustment valve 184 in the second supply tube 182 and the second diffuser tubes 140. The suction side of the second blower 186 is connected to the flow rate adjustment valve 184. The ejection side of the second blower 186 is connected to the second diffuser tubes 140. The second blower 186 further boosts the pressure of the raw material gas having the pressure boosted by the first blower 176.

The flowmeter 190 detects a flow rate QT of the raw material gas ejected from the first blower 176. The flowmeter 192 detects a flow rate Q1 of the raw material gas supplied to the first diffuser tubes 130. The flowmeter 194 detects a flow rate Q2 of the raw material gas to be supplied to the second diffuser tubes 140. Flow rate QT=flow rate Q1+flow rate Q2 is established.

The opening degree of the flow rate adjustment valve 174 and the ejection pressures of the first blower 176 and the second blower 186 are set so that the superficial velocity ratio U0/Umf of a total of the raw material gas diffused from the first diffuser tubes 130 and the raw material gas diffused from the second diffuser tubes 140 becomes 1.1 or more and 2.0 or less, preferably 1.1 or more and 1.5 or less. U0 represents the velocity at which the raw material gas moves inside a fluidized bed FB. Umf represents the fluidization start velocity (minimum fluidization velocity).

In addition, the opening degree of the flow rate adjustment valve 184 is set so that the flow rate Q1) of the raw material gas to be supplied to the first diffuser tubes 130 becomes larger than the flow rate Q2 of the raw material gas to be supplied to the second diffuser tubes 140. In this embodiment, the opening degree of the flow rate adjustment valve 184 is set so that the ratio between the flow rate Q1 and the flow rate Q2 satisfies flow rate Q1:flow rate Q2=7:3.

### [Flows of Catalyst and Raw Material Gas]

Next, the flows of the catalyst and the raw material gas in the above-mentioned hydrogen production apparatus 100 are described. As described above, in the hydrogen production apparatus 100, the catalyst supply unit 150 supplies the catalyst to the accommodating tank 110, and the catalyst discharge unit 160 discharges the catalyst from the accommodating tank 110. Thus, the catalyst moves inside the accommodating tank 110 from above to below by its own weight. As a result, a moving bed of the catalyst is formed in the accommodating tank 110.

In addition, the hydrogen production apparatus 100 includes the first diffuser tubes 130, the second diffuser tubes 140, and the raw material gas supply unit 170. Then, the raw material gas supply unit 170 supplies the raw material gas to the first diffuser tubes 130 and the second diffuser tubes 140 so that the superficial velocity ratio U0/Umf of a total of the raw material gas diffused from the first diffuser tubes 130 and the raw material gas diffused from the second diffuser tubes 140 becomes 1.1 or more and 2.0 or less. As a result, the hydrogen production apparatus 100 can form the fluidized bed FB of the catalyst above the first diffuser tubes 130 and the moving bed MB of the catalyst below the first diffuser tubes 130 in the accommodating tank 110. Thus, the catalyst supplied from the catalyst supply unit 150 forms the moving bed MB after forming the fluidized bed FB, and is discharged by the catalyst discharge unit 160.

The catalyst supply unit 150 supplies the catalyst and the catalyst discharge unit 160 discharges the catalyst, so that the upper surface of the fluidized bed FB is maintained at a predetermined position above the heating unit 120. In addition, the residence time period of the catalyst in the accommodating tank 110 can be controlled by controlling the supply flow rate of the catalyst by the catalyst supply unit 150 and the discharge flow rate of the catalyst by the catalyst discharge unit 160.

In addition, the heating unit 120 is placed above the first diffuser tubes 130. As a result, the heating unit 120 is arranged in the fluidized bed FB of the catalyst. Thus, the fluidized bed FB of the catalyst is heated by the heating unit 120.

Then, the raw material gas diffused from the first diffuser tubes 130 and the second diffuser tubes 140 is heated by the catalyst (convection heat transfer) in the process of passing through the fluidized bed FB of the catalyst. As a result, the pyrolysis reaction represented by the above-mentioned formula (1) progresses, and hydrogen and solid carbon are generated from the hydrocarbon contained in the raw material gas. That is, the main pyrolysis reaction progresses in the fluidized bed FB.

The hydrogen generated as described above and the unreacted raw material gas are fed to a gas treatment facility T in a subsequent stage through an exhaust port 116b formed in the lid portion 116.

Meanwhile, the solid carbon generated by the pyrolysis reaction adheres to the surface of the catalyst. Thus, the solid carbon moves together with the catalyst from the fluidized bed FB to the moving bed MB by their own weight . Then, the solid carbon forms the moving bed MB together with the catalyst, and is finally discharged to outside by the catalyst discharge unit 160. The catalyst discharged to outside and having the solid carbon adhering thereto may be supplied to the accommodating tank 110 again by the catalyst supply unit 150. In addition, the catalyst having the solid carbon adhering thereto may be separated into the catalyst and the solid carbon. The separated catalyst may be supplied to the accommodating tank 110 again by the catalyst supply unit 150.

In addition, the second diffuser tubes 140 are placed below the first diffuser tubes 130. As a result, the second diffuser tubes 140 are arranged in the moving bed MB of the catalyst. Thus, the raw material gas diffused from the second diffuser tubes 140 undergoes heat exchange with the catalyst forming the moving bed MB. As a result, the raw material gas is heated, and the catalyst is cooled.

As described above, the hydrogen production apparatus 100 according to this embodiment forms the fluidized bed FB of the catalyst above the first diffuser tubes 130 in the accommodating tank 110, and forms the moving bed MB of the catalyst below the second diffuser tubes 140. As a result, the hydrogen production apparatus 100 can cause the catalyst after the reaction to continuously move from the fluidized bed FB to the moving bed MB while continuously bringing the catalyst and the raw material gas into contact with each other to continuously perform the pyrolysis reaction of the raw material gas in the fluidized bed FB. That is, the hydrogen production apparatus 100 according to this embodiment can continuously replace the catalyst in the fluidized bed FB while continuously performing the pyrolysis reaction of the raw material gas. Thus, in the fluidized bed FB, a new catalyst and the raw material gas are constantly brought into contact with each other, and hence the pyrolysis reaction can be efficiently progressed.

In addition, in the hydrogen production apparatus 100 according to this embodiment, the heating unit 120 is placed evenly in the fluidized bed FB, and hence the catalyst is substantially uniformly heated by the heating unit 120 in the fluidized bed FB. Accordingly, the hydrogen production apparatus 100 is not required to heat the accommodating tank 110 from outside. As a result, in the hydrogen production apparatus 100, a furnace wall of the accommodating tank 110 is not required to be formed of a high-grade material such as a heat-resistant alloy having a heat resistance of 1,000°C or more and high heat conductivity. Thus, a furnace installation structure using a carbon steel plate lined with a refractory material can be applied to the hydrogen production apparatus 100, and hence the manufacturing cost of the accommodating tank 110 can be reduced. As a result, the hydrogen production apparatus 100 can subject hydrocarbon to pyrolysis at low cost. In other words, the hydrogen production apparatus 100 can produce hydrogen at low cost.

In addition, with the conventional art of heating the inside of the accommodating tank from outside, it is difficult to make the internal temperature of the accommodating tank (temperature of the catalyst) uniform, and hence it is difficult to increase the size of the accommodating tank. Meanwhile, in the hydrogen production apparatus 100, the heating unit 120 is evenly placed in the fluidized bed FB, and hence the temperature of the fluidized bed FB in the accommodating tank 110 can be made uniform as compared to the conventional art of heating the inside of the accommodating tank from outside. Thus, the hydrogen production apparatus 100 can avoid the situation in which the temperature of the catalyst is locally decreased in the fluidized bed FB. Accordingly, the hydrogen production apparatus 100 can efficiently subject hydrocarbon to pyrolysis. In addition, the hydrogen production apparatus 100 can make the temperature of the fluidized bed FB uniform, and hence the size of the accommodating tank 110 can also be increased. Thus, the hydrogen production apparatus 100 can produce a large amount of hydrogen at low cost.

In addition, as described above, the hydrogen production apparatus 100 subjects the raw material gas to pyrolysis to generate hydrogen and solid carbon. Thus, the hydrogen production apparatus 100 can produce hydrogen without emitting carbon dioxide derived from the raw material gas.

In addition, as described above, the superficial velocity ratio U0/Umf of a total of the raw material gas diffused from the first diffuser tubes 130 and the raw material gas diffused from the second diffuser tubes 140 is 1.1 or more and 2.0 or less. As a result, the wear of the heating unit 120 caused by the catalyst can be suppressed. Thus, the durability of the heating unit 120 can be improved.

In addition, as described above, the second diffuser tubes 140 are placed in the moving bed MB of the catalyst. As a result, the heat exchange can be performed between the raw material gas diffused from the second diffuser tubes 140 and the catalyst forming the moving bed MB. Accordingly, the raw material gas can be preheated (convection heat transfer) with the heat of the catalyst forming the moving bed MB. Thus, the heating energy with which the catalyst is heated by the heating unit 120 can be reduced. In addition, the catalyst forming the moving bed MB is cooled to from about 200°C to about 300°C by the raw material gas. As a result, the deterioration of the catalyst discharge unit 160 due to the heat of the catalyst can be suppressed.

In addition, the first diffuser tubes 130 and the second diffuser tubes 140 are placed in the moving bed MB. As a result, the wear of the first diffuser tubes 130 and the second diffuser tubes 140 caused by the catalyst can be reduced.

In addition, as described above, the flow rate of the raw material gas to be supplied to the first diffuser tubes 130 by the raw material gas supply unit 170 is larger than the flow rate of the raw material gas to be supplied to the second diffuser tubes 140 by the raw material gas supply unit 170. The pressure loss of the first blower 176 is increased when the layer height of the catalyst located above the first diffuser tubes 130 is increased. Similarly, the pressure loss of the second blower 186 is increased when the layer height of the catalyst located above the second diffuser tubes 140 is increased. Thus, when the flow rate of the raw material gas to be supplied to the first diffuser tubes 130 in which the layer height of the catalyst located above the first diffuser tubes 130 is relatively low is set to be larger than the flow rate of the raw material gas to be supplied to the second diffuser tubes 140 in which the layer height of the catalyst located above the second diffuser tubes 140 is relatively high, the motive power of the second blower 186 can be reduced.

In addition, as described above, the horizontal cross-section area of the internal space of the lower portion 114 of the accommodating tank 110 is gradually decreased from above to below. As a result, the catalyst can be caused to move smoothly in the lower portion 114. Thus, the places in the lower portion 114 in which the catalyst stagnates can be reduced.

### [Modification Example]

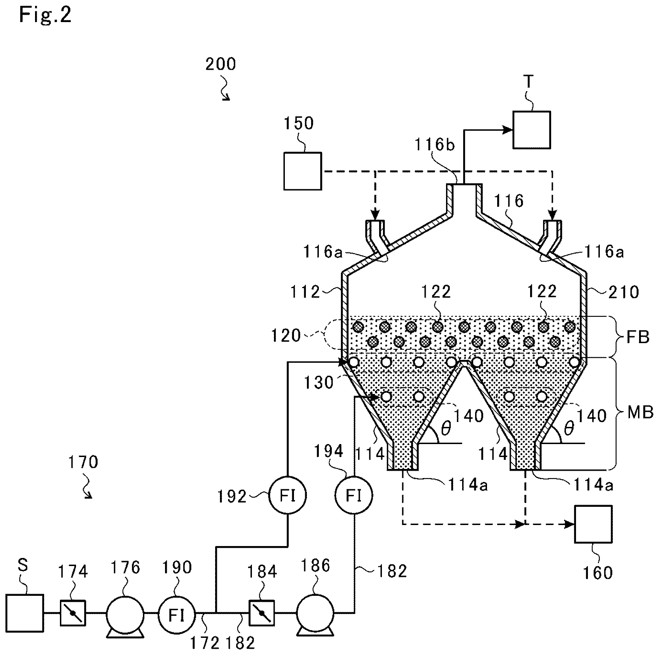

FIG. 2 is a view for illustrating a hydrogen production apparatus 200 according to a modification example. As illustrated in FIG. 2, the hydrogen production apparatus 200 includes an accommodating tank 210, the heating unit 120, the first diffuser tubes 130, the second diffuser tubes 140, the catalyst supply unit 150, the catalyst discharge unit 160, and the raw material gas supply unit 170. In the hydrogen production apparatus 200 according to the modification example, the shape of the accommodating tank 210 is different from that of the accommodating tank 110 of the hydrogen production apparatus 100, and other configurations are substantially the same as those of the hydrogen production apparatus 100. Thus, constituent elements that are substantially the same as those of the above-mentioned hydrogen production apparatus 100 are denoted by the same reference symbols, and description thereof is omitted.

The accommodating tank 210 of the modification example includes one upper portion 112, a plurality of lower portions 114, and one lid portion 116. In the modification example, the lid portion 116 has a plurality of supply ports 116a formed therein. The number of the supply ports 116a may be equal to the number of the lower portions 114.

In a case in which the accommodating tank 110 includes only one lower portion 114 as in the above-mentioned hydrogen production apparatus 100, when an attempt is made to increase the size of the upper portion 112 in the horizontal direction with the inclination angle of the lower portion 114 being maintained while the bottom surface extending in the horizontal direction is eliminated in order to reduce the places in the upper portion 112 in which the catalyst stagnates, the entire height of the accommodating tank 110 is increased. In view of the foregoing, the accommodating tank 210 of the hydrogen production apparatus 200 according to the modification example includes the plurality of lower portions 114. As a result, the height of the accommodating tank 210 can be reduced even when the upper portion 112 is increased in size in the horizontal direction with the inclination angle of each of the lower portions 114 being maintained while the bottom surface extending in the horizontal direction is eliminated. Thus, the height of the accommodating tank 210 can be reduced while the fluidized bed FB of the catalyst, that is, the reaction field for the pyrolysis reaction is enlarged.

In the hydrogen production apparatus 200 according to the modification example, the treatment amount (pyrolysis amount) of the raw material gas per unit time can be increased by enlarging the reaction field for the pyrolysis reaction. Thus, the hydrogen production apparatus 200 according to the modification example can increase the production amount of hydrogen per unit time.

In addition, in the hydrogen production apparatus 200 according to the modification example, the height of the accommodating tank 210 can be reduced. As a result, in the hydrogen production apparatus 200 according to the modification example, the construction cost of the accommodating tank 210 can be reduced.

### [Power Generation System 500]

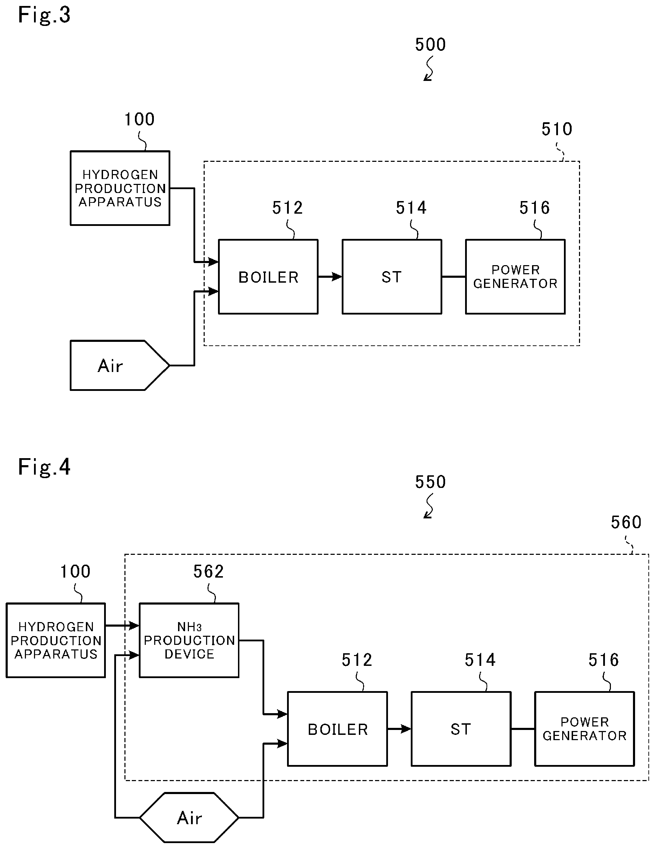

FIG. 3 is a diagram for illustrating a power generation system 500 according to this embodiment. As illustrated in FIG. 3, the power generation system 500 includes the hydrogen production apparatus 100 and a power generation apparatus 510. The power generation apparatus 510 is, for example, a thermal power generation facility. The power generation apparatus 510 includes a boiler 512, a steam turbine 514, and a power generator 516.

The hydrogen produced by the hydrogen production apparatus 100 and air are supplied to the boiler 512. The boiler 512 burns the hydrogen to generate steam. Fuel may be supplied to the boiler 512 in addition to the hydrogen. The fuel is, for example, coal.

The steam generated by the boiler 512 is supplied to the steam turbine 514. The steam turbine 514 converts the energy of the steam into rotational energy.

The power generator 516 converts the rotational energy transmitted from the steam turbine 514 into electric power.

As described above, the power generation system 500 according to this embodiment generates power through use of the hydrogen produced by the hydrogen production apparatus 100. As a result, the power generation system 500 can generate power at low cost.

The power generation apparatus 510 may include a gas turbine instead of the boiler 512 or in addition to the boiler 512. In this case, the gas turbine burns the hydrogen produced by the hydrogen production apparatus 100 to generate rotational energy. The rotational energy generated by the gas turbine is then transmitted to the steam turbine 514. In addition, fuel may be supplied to the gas turbine in addition to the hydrogen. The fuel is, for example, a natural gas obtained by vaporizing a liquefied natural gas.

### [Power Generation System 550]

FIG. 4 is a diagram for illustrating another power generation system 550 according to this embodiment. As illustrated in FIG. 4, the power generation system 550 includes the hydrogen production apparatus 100 and a power generation apparatus 560. The power generation apparatus 560 is, for example, a thermal power generation facility. The power generation apparatus 560 includes an ammonia production device 562, the boiler 512, the steam turbine 514, and the power generator 516. The constituent elements that are substantially the same as those of the above-mentioned power generation system 500 are denoted by the same reference symbols, and description thereof is omitted.

The hydrogen produced by the hydrogen production apparatus 100 and air are supplied to the ammonia production device 562. The ammonia production device 562 produces ammonia from hydrogen and nitrogen contained in air. The ammonia produced by the ammonia production device 562 is supplied to the boiler 512.

The boiler 512 of the power generation apparatus 560 burns the ammonia to generate steam. Fuel may be supplied to the boiler 512 of the power generation apparatus 560 in addition to the ammonia. The fuel is, for example, coal.

As described above, the power generation system 550 according to this embodiment generates power through use of the hydrogen produced by the hydrogen production apparatus 100. As a result, the power generation system 550 can generate power at low cost.

In the same way as in the power generation apparatus 510, the power generation apparatus 560 may include a gas turbine instead of the boiler 512 or in addition to the boiler 512. In this case, the gas turbine burns the ammonia produced by the ammonia production device 562 to generate rotational energy. The rotational energy generated by the gas turbine is then transmitted to the steam turbine 514. In addition, fuel may be supplied to the gas turbine in addition to the ammonia. The fuel is, for example, a natural gas obtained by vaporizing a liquefied natural gas.

### [Power Generation System 600]

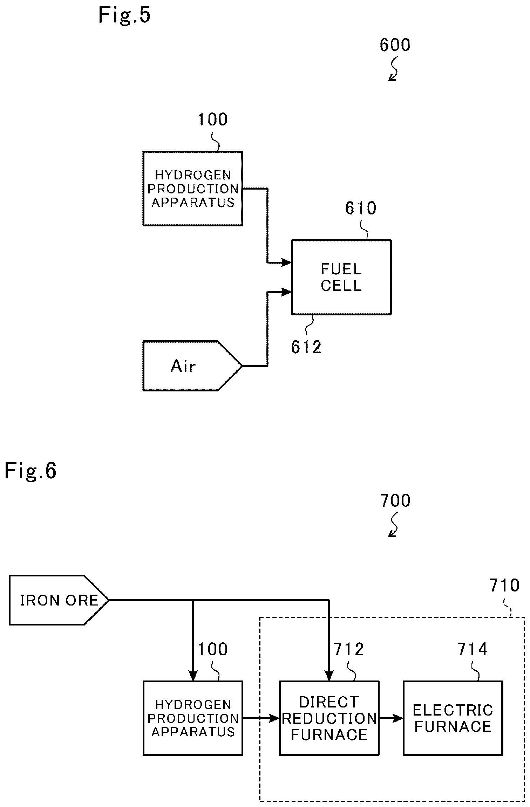

FIG. 5 is a diagram for illustrating another power generation system 600 according to this embodiment. As illustrated in FIG. 5, the power generation system 600 includes the hydrogen production apparatus 100 and a power generation apparatus 610.

The power generation apparatus 610 of the power generation system 600 includes a fuel cell 612. The fuel cell 612 includes a fuel electrode, an air electrode, and an electrolyte placed between the fuel electrode and the air electrode. The hydrogen produced by the hydrogen production apparatus 100 is supplied to the fuel electrode of the fuel cell 612. Air is supplied to the air electrode of the fuel cell 612. The fuel cell 612 generates electric power by reacting the hydrogen with oxygen contained in the air.

As described above, the power generation system 600 according to this embodiment generates power through use of the hydrogen produced by the hydrogen production apparatus 100. As a result, the power generation system 600 can generate power at low cost.

### [Steelmaking System 700]

FIG. 6 is a diagram for illustrating a steelmaking system 700 according to this embodiment. As illustrated in FIG. 6, the steelmaking system 700 includes the hydrogen production apparatus 100 and a steelmaking apparatus 710. In this embodiment, the hydrogen production apparatus 100 uses iron ore as a catalyst.

The steelmaking apparatus 710 includes a direct reduction furnace 712 and an electric furnace 714.

The hydrogen produced by the hydrogen production apparatus 100 and the iron ore are supplied to the direct reduction furnace 712. The direct reduction furnace 712 reduces the iron ore in a solid state with the hydrogen.

The electric furnace 714 melts and refines the iron ore reduced by the direct reduction furnace 712. Thus, iron (e.g., steel) is produced.

As described above, the steelmaking system 700 according to this embodiment produces iron through use of the hydrogen produced by the hydrogen production apparatus 100. As a result, the steelmaking system 700 can produce iron while reducing carbon dioxide (CO₂) emission.

### [Steelmaking System 750]

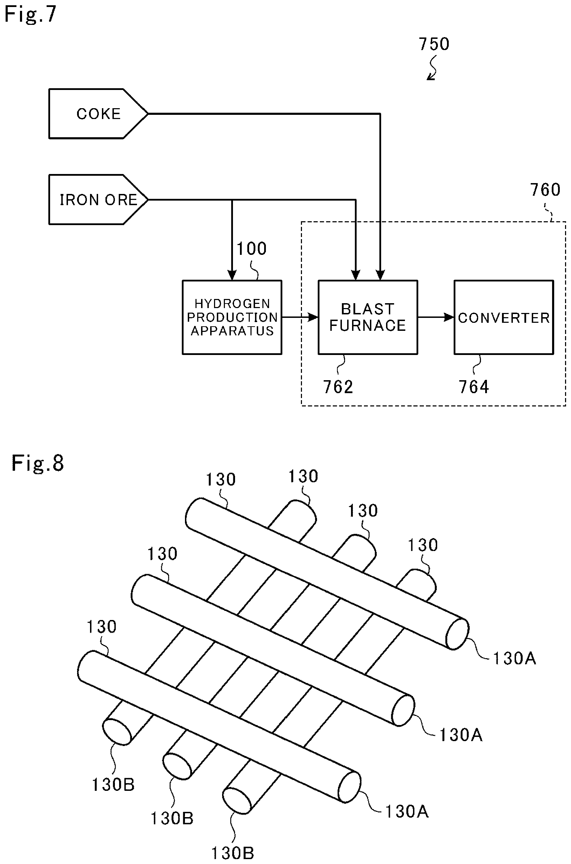

FIG. 7 is a diagram for illustrating another steelmaking system 750 according to this embodiment. As illustrated in FIG. 7, the steelmaking system 750 according to this embodiment includes the hydrogen production apparatus 100 and a steelmaking apparatus 760. In this embodiment, the hydrogen production apparatus 100 uses iron ore as a catalyst.

The steelmaking apparatus 760 of the steelmaking system 750 includes a blast furnace 762 and a converter 764. The hydrogen produced by the hydrogen production apparatus 100, the iron ore, and coke are supplied to the blast furnace 762. The blast furnace 762 reduces the iron ore while melting the iron ore to produce pig iron. The converter 764 converts the pig iron to steel. Thus, iron (e.g., steel) is produced.

As described above, the steelmaking system 750 according to this embodiment produces iron through use of the hydrogen produced by the hydrogen production apparatus 100. As a result, the steelmaking system 750 can produce iron while reducing carbon dioxide emission.

The embodiments have been described above with reference to the attached drawings, but, needless to say, the present disclosure is not limited to the embodiments. It is apparent that those skilled in the art may arrive at various alterations and modifications within the scope of claims, and those examples are construed as naturally falling within the technical scope of the present disclosure.

For example, in the above-mentioned embodiments and the modification example, there has been given, as an example, the case in which the heating unit 120 is placed in the upper portion 112. However, there is no limitation on the installation position of the heating unit 120 as long as the heating unit 120 is placed above the first diffuser tubes 130 in each of the accommodating tanks 110 and 210.

Similarly, in the above-mentioned embodiments and the modification example, there has been given, as an example, the case in which the first diffuser tubes 130 are placed in the upper portion 112. However, there is no limitation on the installation position of the first diffuser tubes 130 as long as the first diffuser tubes 130 are placed between the heating unit 120 and the second diffuser tubes 140 in each of the accommodating tanks 110 and 210.

Similarly, in the above-mentioned embodiments and the modification example, there has been given, as an example, the case in which the second diffuser tubes 140 are placed in the lower portion 114. However, there is no limitation on the installation position of the second diffuser tubes 140 as long as the second diffuser tubes 140 are placed below the first diffuser tubes 130 in each of the accommodating tanks 110 and 210.

Similarly, in the above embodiments and the modification example, there has been given, as an example, the case in which the supply port 116a is formed in the lid portion 116. However, it is appropriate that the supply port 116a be formed above the heating unit 120 in the accommodating tank 110.

Similarly, in the above embodiments and the modification example, there has been given, as an example, the case in which the discharge port 114a is formed in the lower portion 114. However, it is appropriate that the discharge port 114a be formed below the second diffuser tubes 140 in the accommodating tank 110.

In any case, it is appropriate that the supply port 116a, the heating unit 120, the first diffuser tubes 130, the second diffuser tubes 140, and the discharge port 114a be placed in the stated order from above to below.

In addition, in the above-mentioned embodiments and the modification example, there has been given, as an example, the configuration in which the plurality of first diffuser tubes 130 are placed in parallel to the horizontal direction. However, there is no limitation on the installation form of the plurality of first diffuser tubes 130. FIG. 8 is a view for illustrating another example of the installation form of the first diffuser tubes 130. As illustrated in FIG. 8, for example, the hydrogen production apparatuses 100 and 200 may each include first first diffuser tubes 130A placed in parallel to the horizontal direction and second first diffuser tubes 130B placed in parallel to the horizontal direction so that the central axis directions thereof intersect with (for example, are orthogonal to) the first first diffuser tubes 130A.

Similarly, in the above-mentioned embodiments and the modification example, there has been given, as an example, the configuration in which the plurality of second diffuser tubes 140 are placed in parallel to the horizontal direction. However, there is no limitation on the installation form of the plurality of second diffuser tubes 140. For example, the hydrogen production apparatuses 100 and 200 may each include first second diffuser tubes 140 placed in parallel to the horizontal direction and second second diffuser tubes 140 placed in parallel to the horizontal direction so that the central axis directions thereof intersect with (for example, are orthogonal to) the first second diffuser tubes 140.

Similarly, in the above-mentioned embodiments and the modification example, there has been given, as an example, the configuration in which the plurality of heating members 122 forming the heating unit 120 are placed in parallel to the horizontal direction. However, there is no limitation on the installation form of the plurality of heating members 122. For example, the heating unit 120 may include first heating members 122 placed in parallel to the horizontal direction and second heating members 122 placed in parallel to the horizontal direction so that the central axis directions thereof intersect with (for example, are orthogonal to) the first heating members 122.

In addition, in the above-mentioned embodiments and the modification example, there has been given, as an example, the case in which the flow rate of the raw material gas to be supplied to the first diffuser tubes 130 by the raw material gas supply unit 170 is larger than the flow rate of the raw material gas to be supplied to the second diffuser tubes 140. However, the flow rate of the raw material gas to be supplied to the first diffuser tubes 130 by the raw material gas supply unit 170 may be equal to or smaller than the flow rate of the raw material gas to be supplied to the second diffuser tubes 140.

In addition, in the above-mentioned embodiments and the modification example, there has been given, as an example, the case in which the superficial velocity ratio U0/Umf of a total of the raw material gas diffused from the first diffuser tubes 130 and the raw material gas diffused from the second diffuser tubes 140 is 1.1 or more and 2.0 or less. However, it is appropriate that the superficial velocity ratio U0/Umf of a total of the raw material gas diffused from the first diffuser tubes 130 and the raw material gas diffused from the second diffuser tubes 140 be 1.0 or more, or the superficial velocity ratio U0/Umf may be more than 2.0.

In addition, in the above-mentioned embodiments and the modification example, there has been given, as an example, the case in which the accommodating tanks 110 and 210 each include the upper portion 112 and the lower portion 114. However, there is no limitation on the shapes of the accommodating tanks 110 and 210.

In addition, in the above-mentioned embodiments and the modification example, there has been given, as an example, the case in which the plurality of heating members 122 are placed in two stages at different positions in the vertical direction. However, the plurality of heating members 122 may be placed in one stage or may be placed in three or more stages at different positions in the vertical direction. It is appropriate that the plurality of heating members 122 be placed in the number of stages corresponding to the layer height of the fluidized bed FB.

In addition, in the above-mentioned embodiments and the modification example, there has been given, as an example, the case in which the horizontal cross-section area of the internal space of the upper portion 112 of the accommodating tank 110 is substantially constant from above to below. However, there is no limitation on the shape of the internal space of the accommodating tank 110.

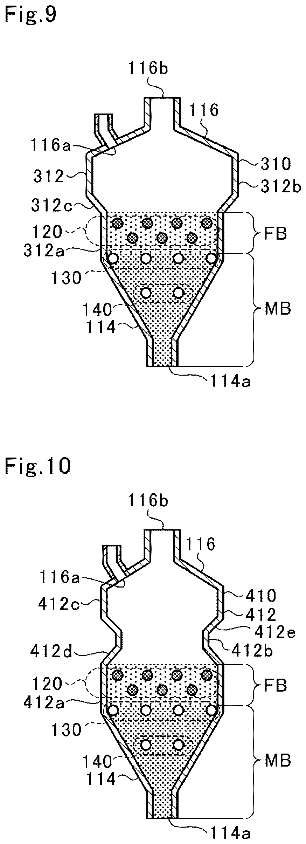

FIG. 9 is a first view for illustrating another example of the shape of an accommodating tank 310. As illustrated in FIG. 9, an upper portion 312 of the accommodating tank 310 includes a small-diameter portion 312a, a large-diameter portion 312b, and a radially expanding portion 312c. The small-diameter portion 312a is continuous with an upper end of the lower portion 114. The horizontal cross-section area of the internal space of the small-diameter portion 312a is substantially constant from above to below. The heating unit 120 and the first diffuser tubes 130 are placed in the small-diameter portion 312a. Thus, the fluidized bed FB is formed in the small-diameter portion 312a.

The large-diameter portion 312b is placed above the small-diameter portion 312a. An upper end of the large-diameter portion 312b is continuous with the lid portion 116. The horizontal cross-section area of the internal space of the large-diameter portion 312b is substantially constant from above to below. The horizontal cross-section area of the internal space of the large-diameter portion 312b is larger than that of the small-diameter portion 312a. The radially expanding portion 312c is continuous with an upper end of the small-diameter portion 312a and a lower end of the large-diameter portion 312b. The horizontal cross-section area of the internal space of the radially expanding portion 312c is gradually increased from below to above. When the upper portion 312 includes the small-diameter portion 312a, the large-diameter portion 312b, and the radially expanding portion 312c, the flow velocity of an upward airflow toward the exhaust port 116b can be reduced, and hence the scattering of the catalyst can be suppressed.

FIG. 10 is a second view for illustrating another example of the shape of an accommodating tank 410. As illustrated in FIG. 10, an upper portion 412 of the accommodating tank 410 includes a large-diameter portion 412a, a small-diameter portion 412b, a large-diameter portion 412c, a radially contracting portion 412d, and a radially expanding portion 412e. The large-diameter portion 412a is continuous with the upper end of the lower portion 114. The horizontal cross-section area of the internal space of the large-diameter portion 412a is substantially constant from above to below. The heating unit 120 and the first diffuser tubes 130 are placed in the large-diameter portion 412a. Thus, the fluidized bed FB is formed in the large-diameter portion 412a.

The small-diameter portion 412b is placed above the large-diameter portion 412a. The horizontal cross-section area of the internal space of the small-diameter portion 412b is smaller than that of the large-diameter portion 412a. The radially contracting portion 412d is continuous with an upper end of the large-diameter portion 412a and a lower end of the small-diameter portion 412b. The horizontal cross-section area of the internal space of the radially contracting portion 412d is gradually decreased from below to above.

The large-diameter portion 412c is placed above the small-diameter portion 412b. An upper end of the large-diameter portion 412c is continuous with the lid portion 116. The horizontal cross-section area of the internal space of the large-diameter portion 412c is larger than that of the small-diameter portion 412b. The radially expanding portion 412e is continuous with an upper end of the small-diameter portion 412b and a lower end of the large-diameter portion 412c. The horizontal cross-section area of the internal space of the radially expanding portion 412e is gradually increased from below to above. When the upper portion 412 includes the large-diameter portion 412a, the small-diameter portion 412b, the large-diameter portion 412c, the radially contracting portion 412d, and the radially expanding portion 412e, the diffusion flow rate is allowed to have a difference in the horizontal direction, and for example, when the diffusion flow rate in a central portion is reduced and the diffusion flow rate in an outer peripheral portion of the central portion is increased, the catalyst can be concentrated in the center.

In addition, the above-mentioned power generation systems 500, 550, and 600 may each include the hydrogen production apparatus 200 instead of the hydrogen production apparatus 100. Similarly, the above-mentioned steelmaking systems 700 and 750 may each include the hydrogen production apparatus 200 instead of the hydrogen production apparatus 100.

In addition, the hydrogen produced by the hydrogen production apparatuses 100 and 200 may be supplied to a gas pipeline.

The present disclosure can contribute to, for example, Goal 7 "Ensure access to affordable, reliable, sustainable and modern energy for all" in Sustainable Development Goals (SDGs).

### Reference Signs List

FB: fluidized bed, MB: moving bed, 100: hydrogen production apparatus, 110: accommodating tank, 112: upper portion, 114: lower portion, 114a: discharge port, 116a: supply port, 120: heating unit, 130: first diffuser tube, 140: second diffuser tube, 150: catalyst supply unit, 160: catalyst discharge unit, 170: raw material gas supply unit, 200: hydrogen production apparatus, 210: accommodating tank, 310: accommodating tank, 312: upper portion, 410: accommodating tank, 412: upper portion, 500: power generation system, 510: power generation apparatus, 550: power generation system, 560: power generation apparatus, 600: power generation system, 610: power generation apparatus, 700: steelmaking system, 710: steelmaking apparatus, 750: steelmaking system, 760: steelmaking apparatus

## Claims

1. A hydrogen production apparatus, comprising:
an accommodating tank;
a heating unit placed in the accommodating tank;
a first diffuser tube placed below the heating unit in the accommodating tank;
a second diffuser tube placed below the first diffuser tube in the accommodating tank;
a catalyst supply unit that supplies a catalyst containing any one or more of iron, nickel, copper, and aluminum from a supply port formed above the heating unit in the accommodating tank;
a catalyst discharge unit that discharges the catalyst from a discharge port formed below the second diffuser tube in the accommodating tank; and
a raw material gas supply unit that supplies a raw material gas containing at least hydrocarbon to the first diffuser tube and the second diffuser tube.

2. The hydrogen production apparatus according to claim 1**,** wherein a flow rate of the raw material gas to be supplied to the first diffuser tube by the raw material gas supply unit is larger than a flow rate of the raw material gas to be supplied to the second diffuser tube.

3. The hydrogen production apparatus according to claim 1, wherein a superficial velocity ratio UO/Umf of a total of the raw material gas diffused from the first diffuser tube and the raw material gas diffused from the second diffuser tube is 1.1 or more and 2.0 or less.

4. The hydrogen production apparatus according to claim 1, wherein, in the accommodating tank, a fluidized bed of the catalyst is formed above the first diffuser tube, and a moving bed of the catalyst is formed below the first diffuser tube.

5. The hydrogen production apparatus according to claim 1,
wherein the accommodating tank includes:
an upper portion having a tubular shape; and
a lower portion, which is formed below the upper portion, and in which a horizontal cross-section area of an internal space is gradually decreased from above to below,
wherein the heating unit is placed in the upper portion, and
wherein the second diffuser tube is placed in the lower portion.

6. The hydrogen production apparatus according to claim 5, wherein the accommodating tank includes one upper portion and a plurality of lower portions.

7. A power generation system, comprising:
a hydrogen production apparatus including:
an accommodating tank;
a heating unit placed in the accommodating tank;
a first diffuser tube placed below the heating unit in the accommodating tank;
a second diffuser tube placed below the first diffuser tube in the accommodating tank;
a catalyst supply unit that supplies a catalyst containing any one or more of iron, nickel, copper, and aluminum from a supply port formed above the heating unit in the accommodating tank;
a catalyst discharge unit that discharges the catalyst from a discharge port formed below the second diffuser tube in the accommodating tank; and
a raw material gas supply unit that supplies a raw material gas containing at least hydrocarbon to the first diffuser tube and the second diffuser tube; and
a power generation apparatus that generates power through use of hydrogen produced by the hydrogen production apparatus.

8. A steelmaking system, comprising:
a hydrogen production apparatus including:
an accommodating tank;
a heating unit placed in the accommodating tank;
a first diffuser tube placed below the heating unit in the accommodating tank;
a second diffuser tube placed below the first diffuser tube in the accommodating tank;
a catalyst supply unit that supplies a catalyst containing any one or more of iron, nickel, copper, and aluminum from a supply port formed above the heating unit in the accommodating tank;
a catalyst discharge unit that discharges the catalyst from a discharge port formed below the second diffuser tube in the accommodating tank; and
a raw material gas supply unit that supplies a raw material gas containing at least hydrocarbon to the first diffuser tube and the second diffuser tube; and
a steelmaking apparatus that produces iron through use of hydrogen produced by the hydrogen production apparatus.
